Europäisches Patentamt

(19) European Patent Office

Office européen des brevets

(11) Publication number: **0 299 632 B1**

(12) **EUROPEAN PATENT SPECIFICATION**

(45) Date of publication of patent specification:
**18.12.91 Bulletin 91/51**

(51) Int. Cl.⁵: **C03B 7/08**

(21) Application number: **88305667.3**

(22) Date of filing: **21.06.88**

(54) **Glass Feeder.**

(30) Priority: **10.07.87 US 73540**

(43) Date of publication of application:
**18.01.89 Bulletin 89/03**

(45) Publication of the grant of the patent:
**18.12.91 Bulletin 91/51**

(84) Designated Contracting States:
**DE FR GB IT**

(56) References cited:
**GB-A- 2 079 266**
**GB-A- 2 140 001**
**US-A- 4 230 476**

(73) Proprietor: **Emhart Glass Machinery
Investments Inc.
c/o RL&F Service Corp. One Rodney Square,
10th Floor 10th and King Streets
Wilmington, Delaware 19801 (US)**

(72) Inventor: **Stankosky, Michael J.
16 Squire Road
Windsor Connecticut 06095 (US)**

(74) Representative: **Wetters, Basil David Peter et
al
Emhart Patents Department Lyn House 39 The
Parade
Oadby, Leicester LE2 5BB (GB)**

## Description

The present invention relates to a glass feeder and more particularly to the refractory orifice ring for such which has a plurality of holes distributing a corresponding number of continuous runners of molten glass to a shear mechanism. Such an orifice ring which may be 27.9 cms (eleven inches) in diameter is subject to a high thermal gradient (on the order of delta T = 926°C (1700°F) which can result in failure of the orifice ring.

Failure of the orifice ring can affect the glass in two significant ways. First, a fissure can score the surface of the glass and pass an imperfection on to the finished product. Second, the faulty orifice ring can allow the molten glass to leak from the feeder. These are both serious problems that can be expensive if they remain undetected. Failure also, of course, causes production time to be lost while the orifice ring is replaced and the system returned to normal.

Prior art multi-hole orifice rings are shown in U.S. Design Patent Nos. 211,609 and 241,269 and the use of such an orifice ring is illustrated in US-A-4,554,000. During such use, small, hairline stress cracks may develop at the outer periphery which cause the ring to fail when they reach one of the orifice openings.

Other prior suggestions are as follows :

US-A-4230476 shows a multi-hole orifice ring for use in a glass feeder. The bottom of this orifice ring has a complex contour which incorporates a number of marked changes of slope, and changes in thickness. Such changes result in concentrations of stress and thus tend to lead to cracking of the orifice ring.

GB-A-2079266 shows an elongated four hole orifice ring. Such an orifice ring is not designed for use with a conventional feeder which has a circular orifice ring, and has small areas of greatly increased thickness between the several holes. Such areas are again likely to result in concentration of stress in certain areas.

GB-A-2140001 shows a four hole orifice ring of the more customary circular shape. This again has a bottom wall which is of varying shape and thickness, likely to result in concentration of stress, leading to cracking.

It is an object of the present invention to provide an improved orifice ring which minimizes the likelihood that a stress crack will reach one of the orifice ring holes thereby extending the life of the orifice ring.

The invention provides a glass feeder comprising :

a spout bowl assembly for containing molten glass including,
a spout bowl, and
a refractory orifice ring at the bottom of said spout bowl having a plurality of discharge holes defined therein through which runners of molten glass may flow,
means for controlling the volume of the runners flowing through said orifice ring discharge holes,
wherein the refractory orifice ring comprises
an annular side wall of uniform cross-section
a planar bottom wall of uniform thickness,
a discreet number of ribs defined in said bottom wall and extending between each pair of holes and merging into said annular side wall at selected locations equidistant from each pair of said holes said ribs being "V" shaped in cross-section with the legs of the "V" directed downwards and cooling tubes being provided between said legs, said bottom wall having an increased thickness around the priphery of each hole.

The accompanying drawings illustrate a presently preferred embodiment incorporating the principles of the invention.

Referring to the drawings :
Figure 1 is an elevational view of a prior art glass spout bowl assembly which delivers molten glass through an orifice plate to a shear meachanism ;
Figure 2 is a view looking down into the orifice plate of the invention, which is used in place of the orifice plate shown in Figure 1 ;
Figue 3 is a view taken along lines III-III of Figure 2 ;
Figure 4 is a view taken along lines IV-IV of Figure 3 ; and

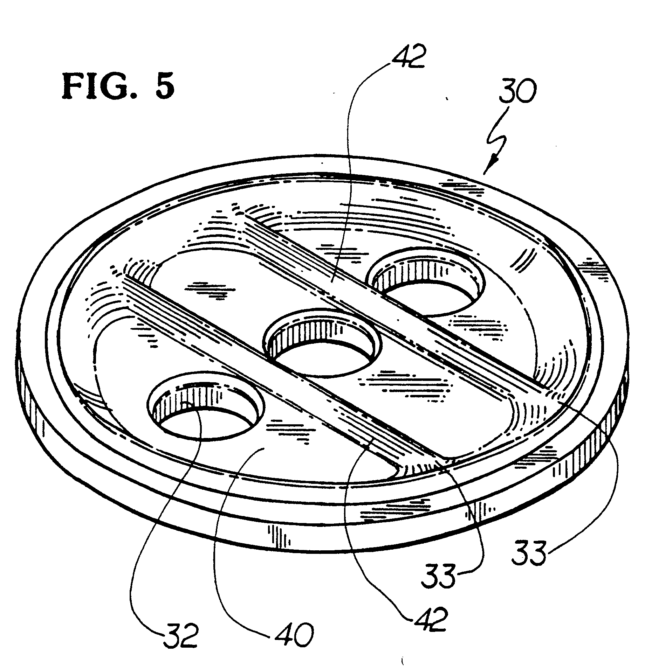

Figure 5 is an oblique view of the orifice ring shown in Figure 2.

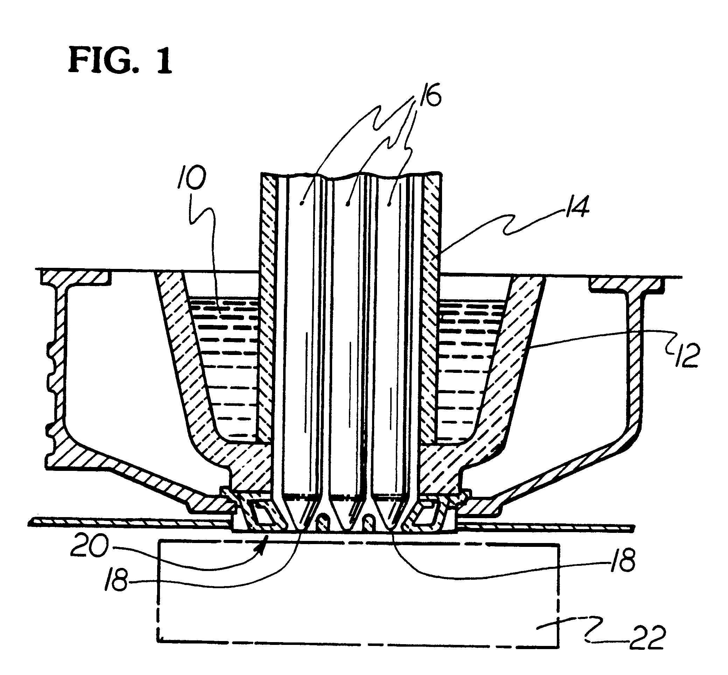

Figure 1 shows a prior art spout bowl assembly in which molten glass 10 is contained within a spout bowl container defined by a refractory bowl 12 and a refractory tube 14 which surounds a plurality of plungers 16. The lower ends 18 of the plungers 16 cooperate with an orifice plate 20 to allow runners of molten glass to be delivered to a shear mechanism 22. This shear mechanism shears the runners into discrete gobs which are fed to individual sections of a glassware forming machine (not shown).

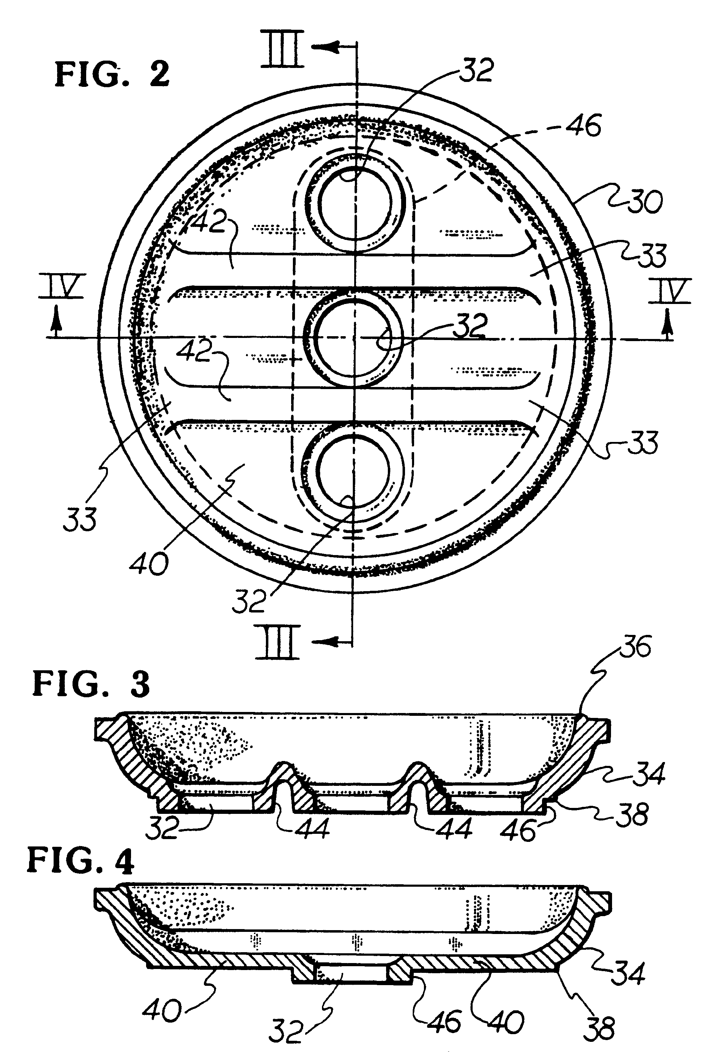

The orifice ring 30 of the invention has a plurality of holes 32 (here three in-line holes) is designed to define discrete areas 33, as far from the holes 32 as possible, where, in the event of fracture, the fracture will begin. To this end, the side wall 34 (Figure 3) of the orifice plate which extends from the top 36 of the orifice plate to bottom outside edge 38 is of uniform configuration around the orifice plate and the bottom 40 of the orifice plate has a uniform thickness where it joins the side wall, except where a pair of parallel strengthening ribs 42 are located. These strengthening ribs, which have a uniform cross-section, extend perpendicular to the array of holes 32 from one side of the orifice plate to the other, and merge with the sidewall 34 to define localized areas 33 at the periphery of the orifice plate where stress will be concentrated. Grooves 44 are defined in these strengthening ribs to receive cooling tubes (not shown) which maintain constant temperature across each hole so that the molten glass runners will be discharged vertically as desired. Since stress is concentrated at these discrete peripheral areas 33, when the orifice ring fractures, it will start at these areas with the generation of a hairline fracture which will proceed adjacent the strengthening rib 42 toward an orifice hole 32. These discrete areas 33 are located a maximum distance from the orifice holes to increase the distance a hairline fracture must travel to reach an orifice hole.

The straight linear array of orifice holes 32 reinforced with a thickened section 46 which is slightly wider than an orifice hole and which extends completely along the linear array of holes 32 (except where the grooves cut across this section).

The function of this thickened section 46 is to define with the rib a reinforced area completely around each hole so that any hairline crack that reaches this area will either continue along the rib or be redirected along the margin of this thickened section, and hence, in a direction parallel to the array of holes thereby preventing the crack from reaching a hole.

## Claims

1. A glass feeder comprising :
a spout bowl assembly for containing molten glass including,
   a spout bowl (12), and
   a refractory orifice ring (30) at the bottom of said spout bowl (12) having a plurality of discharge holes (32) defined therein through which runners of molten glass may flow,
means (16) for controlling the volume of the runners flowing through said orifice ring discharge holes (32),
wherein the refractory orifice ring (30) comprises an annular side wall (34) of uniform cross-section, a planar bottom wall (40) of uniform thickness,
a discreet number of ribs (42) defined in said bottom wall (40) and extending between each pair of holes (32) and merging into said annular side wall (34) at selected locations equidistant from each pair of said holes, said ribs (42) being "V" shaped in cross-section with the legs of the "V" directed downwards and cooling tubes being provided between said legs,
said bottom wall (40) having an increased thickness (46) around the periphery of each hole (32).
2. A glass feeder according to claim 1, characterised in that said refractory orifice ring (30) includes three discharge holes (32) arranged in a straight array.

3. A glass feeder according to claim 2, characterised in that the increased thickness (46) around the holes (32) defines a single elongated raised area having parallel sides.

## Patentansprüche

1. Glasspeiserkopf mit einer Ausgußschalenanordnung zur Aufnahme von geschmolzenem Glas, die eine Ausgußschale (12) und einen feuerbeständigen Ring (30) am Boden der Ausgußschale (12) einschließt, welcher eine Vielzahl von Abgabelöchern (32) aufweist, durch welche geschmolzene Glasmengen strömen können, mit einer Einrichtung (16) zum Steuern des Volumens der durch die Abgabelöcher (32) des Ringes strömenden Materialmengen, wobei der feuerbeständige Ring (30) eine ringförmige Seitenwand (34) gleichförmigen Querschnittes, eine ebene Bodenwand (40) gleichmäßiger Dicke und einer Anzahl von Rippen (42) umfaßt, welche in der Bodenwand (40) ausgebildet sind und sich zwischen jedem Paar der Löcher (32) erstrecken und in die ringförmige Seitenwand (34) an ausgewählten Lagen übergehen, welche von jedem Paar der Löcher gleichmäßig beabstandet sind, wobei die Rippen (42) im Querschnitt V-förmig ausgebildet sind, die Schenkel des V abwärts gerichtet sind und zwischen diesen Schenkeln Kühlrohre vorgesehen sind, wobei die Bodenwand (40) um den Umfang eines jeden Loches (32) eine größere Dicke (46) aufweist.

2. Glasspeiserkopf nach Anspruch 1, dadurch gekennzeichnet, daß der mit Öffnungen versehene feuerbeständige Ring (30) drei Abgabeöffnungen (32) aufweist, die in einer geraden Reihe angeordnet sind.

3. Glasspeiserkopf nach Anspruch 2, dadurch gekennzeichnet, daß die größere Dicke (46) um die Löcher (32) einen länglichen erhabenen Bereich mit parallelen Seiten definiert.

## Revendications

1. Distributeur de verre comprenant :
— un ensemble cuvette d'avant-corps à goulotte destiné à contenir du verre fondu et comprenant elle-même :
   — une cuvette d'avant-corps à goulotte (12) ; et
   — une plaque d'écoulement réfractaire (30), prévue dans le fond de ladite cuvette d'avant-corps à goulotte (12), dans laquelle sont définis une pluralité de trous de sortie (32) à travers lesquels peuvent s'écouler des courants de verre fondu ;
— des moyens (16) servant à commander le volume des courants qui passent à travers lesdits trous de sortie (32) de la plaque d'écoulement :

dans lequel la plaque d'écoulement réfractaire (30) comprend :

— une paroi latérale annulaire (34) de section uniforme ;

— une paroi de fond plane (40) d'épaisseur uniforme ;

— un nombre discret de nervures (42) définies dans ladite paroi de fond (40) et qui s'étendent dans chaque intervalle entre deux trous (32) et se fondent dans ladite paroi latérale annulaire (34) en des endroits sélectionnés équidistants des deux trous de chaque paire, lesdites nervures (42) étant en forme de "V" en section transversale, avec les branches du "V" dirigées vers le bas, et des tubes de refroidissement étant prévus entre lesdites branches ;

ladite paroi de fond (40) présentant une épaisseur augmentée (46) autour de la périphérie de chaque trou (32).

2. Distributeur de verre selon la revendication 1, caractérisé en ce que ladite plaque d'écoulement réfractaire (30) comprend trois trous de sortie (32) disposés en une rangée rectiligne.

3. Distributeur de verre selon la revendication 2, caractérisé en ce que l'épaisseur augmentée (46) qui entoure les trous (32) définit une zone en surépaisseur unique, de forme allongée, qui possède des côtés parallèles.

# FIG. 1

FIG. 2

FIG. 3

FIG. 4

# FIG. 5